Europäisches Patentamt

European Patent Office

Office européen des brevets

(19)

(11) Publication number: **0 266 487 B1**

(12) # EUROPEAN PATENT SPECIFICATION

(45) Date of publication of patent specification : 05.06.91 Bulletin 91/23

(51) Int. Cl.⁵ : **F16L 41/00**

(21) Application number : 87108894.4

(22) Date of filing : 22.06.87

(54) Fluid connector.

(30) Priority : 03.11.86 IT 2357486 U

(43) Date of publication of application : 11.05.88 Bulletin 88/19

(45) Publication of the grant of the patent : 05.06.91 Bulletin 91/23

(84) Designated Contracting States : AT BE CH DE ES FR GB GR LI LU NL SE

(56) References cited :
DE-A- 2 439 527
GB-A- 1 022 572
GB-A- 2 158 909
US-A- 2 307 328

(73) Proprietor : MURRAY EUROPE S.p.A.
Via A. Volta, 17
I-20090 Cusago(Milano) (IT)

(72) Inventor : Dalla Bona, Alfredo
Vicolo Bezzecca, 14/16
I-20081 Abbiategrasso (Milano) (IT)
Inventor : Airaghi, Attilio
Via E. Mattei 21/D
I-20010 Cornaredo (Milano) (IT)

(74) Representative : Lecce, Giovanni
Dott. Giovanni Lecce & C. S.r.l. Via G. Negri 10
I-20123 Milano (IT)

## Description

This invention relates to a connector for fluids. More precisely, this invention provides a connector for the transmission of low-pressure fluids.

It is known that within many areas of industry, and in particular the automobile industry, systems for the transmission of low-pressure fluids are currently in use.

This system's capacity for transmission is guaranteed by way of a fastened brace attatched to a screw that compresses the joint or eye-shaped connector between two tempered copper washers.

In this way, a rigid joint is created that prevents the fluids inside to escape.

The above-described type of joint, while being fairly satisfactory from the functional point of view, does however have the disadvantage of requiring a pair of strong fastenings, and manual dexterity on the part of the operator who, in the mounting phase, must assemble with great care and skill the various parts one with another before beginning the installation.

It follows form this that the assembly and installation of the known type of joint takes a long time and that a fluid-tight seal is not always perfectly achieved.

US-A-2,307,328 discloses a fluid connector such as defined in the preamble of claim 1.

The fluid connector disclosed in this reference comprises, in combination :

– a fitting body having an internal chamber communicating with a tubular conduit and coaxial bore-holes at the opposite sides of said fitting body, the common axis of said bore-holes being substantially perpendicular to that of said tubular conduit ;

– an hollow anchor bolt inserted with said bore holes with the shank portion possessing an internal conduit which is coaxial with the common axis of the bore-holes and which communicates with the internal chamber by means of a transveral bore-hole and

– upper and lower sealing assemblies positioned in annular recesses, whereupon the tightening of the anchor bolt serves to squeeze the sealing assemblies between the anchor bolt and the body portion and the body.

The fluid connector disclosed in this reference is not provided as a pre-assembled unit with each of its component elements in proper, centred relationship with each other element.

The installation of this tubing fitting requires some preliminary operations comprising the exact positioning of the sealing assembly on the annular recess, the insertion of the anchor bolt, and the exact positioning of the sealing assembly on the annular recess. The final position of fitting body is determined only by securely screwing the anchor bolt to the body.

The present invention overcomes the above-mentioned disadvantages by providing a fluid connector whose different parts are preassembled and ready for immediate use.

According to the present invention, a fluid connector, particularly suitable for the transmission of fluids at low pressure, having the above-mentioned characteristics, comprises :

a) a bored mobile eye-shaped fitting body possessing an internal chamber communicating with a tubular conduit and coaxial bore-holes at the opposite sides of said fitting body, the common axis of said bore-holes being substantially perpendicular to that of said tubular conduit ;

b) a screw brace having a head portion and a leg portion, the leg portion being inserted with said bore-holes, said leg portion possessing an internal conduit which is co-axial with the common axis of the bore-holes and which communicates with said internal chamber by means of at least one transverse bore-hole, said leg portion further possessing a threaded end portion, opposite to the head portion ; one bore-hole of said fitting body being adjacent the head portion and one bore-hole being adjacent the threaded portion ;

c) two flexible, elastomeric sealing rings seated around the leg portion of the screw brace and placed, respectively, one on the outer surface of the bore-hole adjacent the inner surface of the head portion, and one on the outer surface of the bore-hole adjacent the threaded portion ; wherein the leg portion possesses annular grooves, one adjacent the inner surface of the bore-hole adjacent the head portion, and one adjacent the outer surface of the bore-hole adjacent the threaded portion ; a metallic retaining is inserted into the annular groove adjacent the inner surface of the bore-hole and one of the two flexible, elastomeric sealing rings is inserted into the annular groove adjacent the outer surface of the bore-hole.

The flexible, elastomeric sealing rings are preferably made of elastic material having circular cross-seactions.

The fluid connector of the present invention has the following advantages :

A) All of the component parts of the connector are pre-assembled and ready for immediate use. Thus, the operations are facilitated and the installation time is reduced.

B) The fluid-tightness of the various components is assured by the flexibility and elasticity and adherence of the elastic rings which are made of elastic material or the like.

C) The installation of the connector no longer requires a pair of strong braces because the fluid-tightness is assured by the elastic rings.

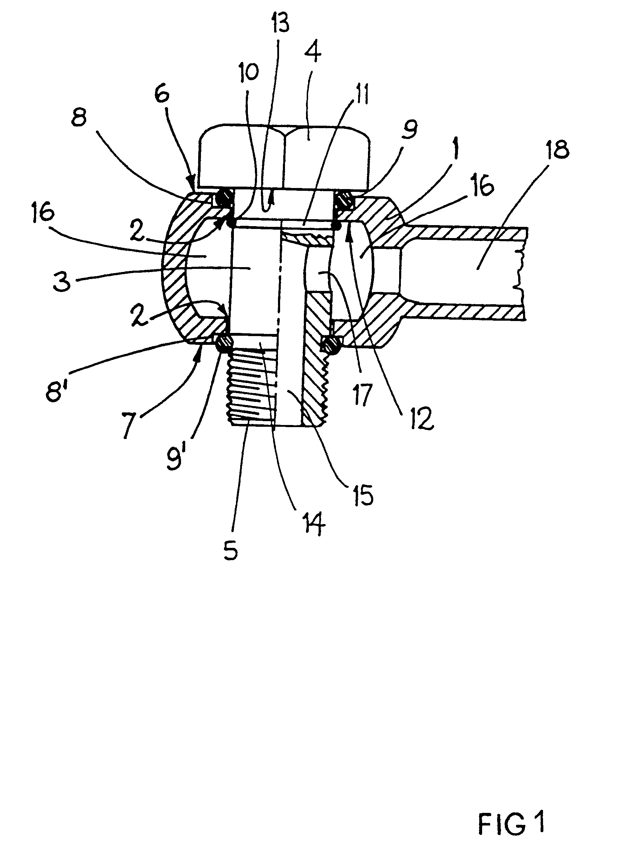

The constructional and functional characteristics of this invention can be better understood from the following detailed description which refers to the attatched illustration which shows a schematic view of a transverse section of one form of the fluid connector of this invention. With reference to the figure, the fluid connector of the present invention includes an eye-shaped mobile joint 1, in the passing parallel bore-holes 2, in which is inserted the body 3, of a screw. The head of the screw 4, (preferably a facet-headed type) and the bottom threaded end 5, both respectively projecting forth from opposite parallel planes 6 and 7, of the joint 1.

On the planes 6 and 7, in proximity to the edges of said passing bore-holes 2, are impressed ring-shaped seatings 8 and 8' where the elastic rings are inserted, (preferably circular in section) 9 and 9'.

The screw, inserted into the parallel bore-holes 2, remains in its pre-assembly position through a retaining ring of elastic metal 10, which is disposed in an annular groove 11, located on the body 3 of the screw in proximity to the upper internal face 12 of the joint 1 adjacent to the external face 6. In this position, the lower face 13 of the head 4 remains substantially adjacent to the parallel face 6 of the joint 1, holding in its position 8 the elastic ring 9. The elastic 9', besides being contained in its ring-shaped housing 8', works in conjunction with a groove 14 applied to the body 3 of the screw at the initial point of the threading 5, substantially corresponding to the external facing 7.

The elastic rings 9 and 9' are preferably of the circular transversal-sectioned type and are made from a flexible material, for example, an elastomeric material.

The body 3 of the screw is endowed with a central conduit 15 that communicates with the internal space 16 of the mobile joint 1 through at least one transversal hole 17. In turn, the internal space 16 connects to the tubular body 18 which is connected to the joint 1.

As one will appreciate from all that is herein described or illustrated, all of the components of the fluid connector herein assembled and as regards installation, it is sufficient to screw part number 5 into the corresponding threaded hole from which comes, or into which flows, fluid for the purpose of transportation.

During the installation process all of the components of the fluid connector herein remain in their aligned positions and, to complete the coupling, it is sufficient to merely tighten to the a point where the elastic ring 9, becomes squeezed and compressed between its seat 8, and the lower surface 13, of the head 4, and the elastic ring 9', becomes squeezed and compressed between its seat 8, and the surface (not illustrated) to which the mobile joint is to be joined.

In this manner, the fluid-tightness of the fluid connector herein is assured as are the connections of the communicating parts. Furthermore, the installation of the fluid connector of the present invention is rendered simple, rapid and secure.

## Claims

1. A fluid connector provided as a pre-assembled unit which comprises :

a) a bored mobile eye-shaped fitting body (1) possessing an internal chamber (16) communicating with a tubular conduit (18) and coaxial bore-holes (2) at the opposite sides of said fitting body, the common axis of said bore-holes (2) being substantially perpendicular to that of said tubular conduit (18) ;

b) a screw brace having a head portion (4) and a leg portion (3), the leg portion being inserted with said bore-holes (2), said leg portion possessing an internal conduit (15) which is co-axial with the common axis of the bore-holes (2) and which communicates with said internal chamber (16) by means of at least one transverse bore-hole (17), said leg portion (3) further possessing a threaded end portion (5), opposite to the head portion (4) ; one bore-hole of said fitting body being adjacent the head portion (4) and one bore-hole being adjacent the threaded portion (5) ;

c) two flexible, elastomeric sealing rings (9, 9') seated around the leg portion (3) of the screw brace and placed, respectively, one on the outer surface (6) of the bore-hole adjacent the inner surface (13) of the head portion (4), and one on the outer surface (7) of the bore-hole adjacent the threaded portion (5),

CHARACTERIZED IN THAT the leg portion (3) possesses annular grooves (11, 14), one adjacent the inner surface (12) of the bore-hole adjacent the head portion (4), and one adjacent the outer surface (7) of the bore-hole adjacent the threaded portion (5), and in that a metallic retaining ring (10) is inserted into the annular groove (11) adjacent the inner surface (12) of the bore-hole (2) and one of the two flexible, elastomeric sealing rings (9') is inserted into the annular groove (14) adjacent the outer surface (7) of the bore-hole.

2. The fluid connector according to claim 1, characterized in that the flexible, elastomeric sealing rings (9, 9') have circular cross-section.

3. The fluid connector according to claim 1 or 2, characterized in that the opposite outer surfaces (6, 7) of the fitting body (1) possess annular grooves (8, 8') adjacent the corresponding bore-hole (2), in which grooves the elastic rings (9, 9') are inserted.

4. The fluid connector according to anyone of the preceding claims, wherein the elastic ring (9) is placed between the inner surface (13) of the head portion (4) of the screw brace and the annular groove (8).

5. The fluid connector according to anyone of the preceding claims, wherein the elastomeric sealing rings (9, 9') sealingly block the components of the fitting body (1) to the body to which it is applied, when the screw brace is tightened.

## Ansprüche

1. Ein Anschlusstueck fuer Fluessigkeiten, geliefert als vormontierte Einheit, die folgendes umfasst :

a) einen gebohrten, beweglichen, angenfoermigen Rohrverbindungskoerper (1) mit einer inneren Kammer (16), die mit der Rohrleitung (18) und den koaxialen Bohrloechern (2) an den dem besagten Rohrverbindungskoerper gegenueberliegenden Enden in Verbindung steht, wobei die gemeinsame Achse der besagten Bohrungen (2) sich im wesentlichen rechtwinklig zu der der besagten Rohrleitung (18) verhaelt ;

b) einer Schraubverbindung mit Kopf- (4) und schaftteil (3), wobei der schaft mit besagten Bohrungen (2) eingesetzt wird und der besagte Schaft eine innere Rohrleitung (15) aufweist, die sich koaxial zu der gemeinsamen Achse der Bohrungen (2) verhaelt und mit der besagten inneren Kammer (16) durch mindestens eine Querbohrung (17) in Verbindung steht, wobei der besagte Schaft (3) darueberhinaus einen Gewindeendteil (5) aufweist, der dem Kopfteil (4) gegenueberliegt und eine Bohrung des besagten Rohrverbindungskoerpers am Kopfteil (4) und eine Bohrung am Gewindeteil anliegt ;

c) zwei biegsame, elastomerische, ringfoermige Nuten (9, 9′), die rund um den Schaft (3) der Schraube angeordnet sind und von denen sich jeweils eine an der aeusseren Oberflaeche (6) der Bohrung, an der inneren Oberflaeche (13) des Kopfteils (4) anliegend, und die andere an der aeusseren Oberflaeche (7) der Bohrung, am Gewindeteil (5) anliegend, befinden, DADURCH GEKENNZEICHNET, DASS der Schaftteil (3) ringfoermige Nuten (11, 14) aufweist, von denen eine an der inneren Oberflaeche (12) der Bohrung am Kopfteil (4) anliegt und eine an der aeusseren Oberflaeche (7) der Bohrung anliegt, die am Gewindeteil (5) anliegt, sowie darin, dass ein Metallsprengring (10) in die ringfoermige Nut (11) an der inneren Oberflaeche (12) der Bohrung (2) eingesetzt ist und einer der beiden flexiblen, elastomerischen Dichtringe (9′) in der ringfoermigen Nut (14) an der aeusseren oberflaeche (7) der Bohrung sitzt.

2. Das Anschlusstueck fuer Fluessigkeiten laut Anspruch 1, gekennzeichnet dadurch, dass die flexiblen, elastomerischen Dichtringe (9, 9′) einen kreisfoemigen Querschnitt haben.

3. Das Anschlusstueck fuer Fluessigkeiten laut Anspruch 1 oder 2, gekennzeichnet dadurch, dass die gegenueberliegenden aeusseren Oberflaechen (6, 7) des Robrverbindungskoerpers ringfoermige Nuten (8, 8′) aufweisen, die an den entpsrechenden Bohrungen (2) liegen, in deren Nuten die Federringe (9, 9′) eingesetzt sind.

4. Das Anschlusstueck fuer Fluessigkeiten laut einem beliebigen der o.g. Ansprueche, wobei der Federring (9) sich zwischen der inneren oberflaeche (13) des Kopfteils (4) der Schraubverbindung und der ringfoermigen Nute (8) befindet.

5. Das Anschlusstueck fuer Fluessigkeiten laut einem beliebigen der o.g. Ansprueche, wobei die elastomerischen Federringe (9, 9′) die Bauteile des Rohrberbindungskoerpers (1) dicht mit dem Koerper, an dem er angebracht ist, verbinden, sobald die Schraube angezogen wird.

## Revendications

1. Un fluide connecteur présenté sous forme de pré-assemblage et se composant :

a) d'une sonde mobile pour corps (1) munie d'un oeil et ayant une chambre interne (16) communiquant avec un conduit tubulaire (18) et des orifices coaxiaux (2) de chaque côté du corps, les axes communs aux orifices de la sonde (2) sont en substance perpendiculaires au conduit tubulaire cité ci-dessus (18) ;

b) d'une vis formée d'une tête (4) et d'un pied (3), le pied de vis est inséré aux orifices de la sonde (2), il est lui-même composé d'un conduit interne (15) dont l'axe est le même que les axes déjà communs aux orifices de la sonde (2) et communiquant avec la chambre interne (16) par une autre, plus petite et perpendiculaire à l'orifice de la sonde (17), le pied (3) en plus de posséder un filet de vis (5), opposé à la tête (4), possède également un orifice pour le corps qui est placé à côté de la tête (4) et un autre placé à côté du filet de vis (5) ;

c) de deux anneaux flexibles en caoutchouc (9,9′) qui sont fixés autour du pied (3) et placés respectivement, l'un sur la partie externe (6) de l'orifice menant à la partie interne (13) de la tête de vis (4), et l'autre sur la partie externe (7) de l'orifice de la sonde menant au filet de vis (5).

CARACTERISE DE CETTE MANIERE le pied de vis est composé de deux anneaux cannelés (11, 14) l'un placé sur la surface interne (12) de l'orifice de la sonde qui se trouve près de la tête de vis (4), et l'autre placé sur la surface externe (7) de l'orifice de la sonde qui se trouve près du filet de vis (5) ; et d'un anneau métallique de blocage (10) qui s'insère dans les cannelures des autres anneaux (11) placés à côté de la surface interne (12) de l'orifice de la sonde (2) et l'un des deux anneaux flexibles en caoutchouc fixes vient s'insérer dans l'anneau cannelé (14) qui se trouve à côté de la surface externe (7) de l'orifice de la sonde.

2. Le fluide connecteur, selon la revendication N°1, est caractérisé par des anneaux flexibles en caoutchouc (9, 9′) ayant une partie circulaire transversale.

3. Le fluide connecteur, selon les revendications 1 et 2, est caractérisé par deux surfaces externes opposées (6, 7) du corps (1) étant composées d'anneaux cannelés (8, 8') placés près des orifices de la sonde correspondants (2) dans lesquels sont insérés les anneaux en caoutchouc.

4. Le fluide connecteur, selon l'une ou l'autre des revendications mentionnées précédemment, indique que l'anneau en caoutchouc (9) est placé entre la surface interne (13) de la tête de vis (4) et l'anneau cannelé (8).

5. Le fluide connecteur, selon l'une ou l'autre des revendications mentionnées précédemment, indique que les anneaux fixes en caoutchouc (9, 9') forment un seul et même bloc avec les composants du corps (1), ce dernier s'appliquant à un autre corps quand la vis est serrée.

FIG 1